# EUROPEAN PATENT APPLICATION

(11) **EP 4 421 370 A1**
(43) Date of publication of application: **28.08.2024**
(21) Application number: 23382174.3
(22) Date of filing: 24.02.2023
(51) Int. Cl.: F16L 9/18, F16L 55/035, F16L 59/12, F16L 59/13

(54) **A DOUBLE-WALLED INSULATED TUBING AND A SPACER FOR THE SAME**

(71) Applicant: SAINT-GOBAIN ISOVER, 92400 Courbevoie (FR)
(72) Inventor: MUNOZ, Roberto Hernandez, Toledo 45224 (ES); MARTINEZ, Juan Jose Orta, Madrid 28939 (ES)
(74) Representative: Kuhnen & Wacker Patent- und Rechtsanwaltsbüro PartG mbB

(57) **Abstract**

Double-walled insulated tubing (10) comprising:
an inner pipe (11), an outer cover or cladding (12), an insulation layer (13) arranged between the inner pipe (11) and the outer cover or cladding (12), and a spacer (14) connecting the inner pipe (11) and the outer cover or cladding (12), wherein the spacer comprises: a first pedestal (15) directly or indirectly attached to the inner pipe (11) and a second pedestal (16) directly or indirectly attached to the outer cover or cladding (12), an absorber means (20) having a first absorber section (22) and a second absorber section (23), the first absorber section (22) being arranged between on side of the first pedestal (15) facing the inner pipe (11) and the second absorber section (23) being arranged on a side of the second pedestal (16) facing the outer cover or cladding (12), and a retainer (27) retaining the absorber means (20).

## Description

The present invention pertains to a double-walled insulated tubing comprising: an inner pipe, an outer cover or cladding, an insulation layerarranged between the inner pipe and the outer cover or cladding, and a spacer connecting the inner pipe and the outer cover or cladding. The present invention further pertains to a spacer for same.

Such a double-walled insolation tubing and a spacer for same is known, inter alia, from DE 31 04 908 A1 or DE 37 40 528 A1.

Such a tubing is inter alia used in refineries or LNG (liquid natural gas) terminals, for example, to convey liquid or gaseous media of high or cold temperature. The media is conveyed through the inner pipe which is covered with an insulation layer to maintain the temperature. For hot temperatures usually an insulation layer made of mineral wool is used while for cold temperature diatomaceous earth (kieselguhr) is often utilized. Also aerogel is known as an efficient insulation material.

Usually a barrier, e.g. a vapour barrier, covers the insulation layer to prevent moisture penetrating the insulation material which would cause a loss of the insulation properties and may lead to corrosion of the inner pipe. Typically, the vapour barrier is an aluminium foil faced onto the insulation layer. Other materials, such as of a sarking membrane type, e.g., a PET based fleece material, are also possible. A metal cover or metal cladding covers the barrier or (seldom) the insulation layer as a protective cover against weathering and/or mechanical damage. Normally, an air gap is present between the insulating layer or the barrier and the metal cover or cladding. Besides humidity control and discharge the air gap advantagely serves as a vibration decoupling layer for the insulating layer/barrier and the cover or cladding layer. Further a cover or cladding formed from other material of sufficient mechanical strength like reinforced polyester is known in the art.

In practical applications the outer cover or cladding usually comprises the protective cover or cladding and the barrier. In seldom applications the barrier may be omitted if moisture is not an issue. In even more seldom applications the protective cover or cladding may be omitted if weathering and/or mechanical damage is not an issue. A number of spacers placed in distances circumferentially and along the length of the tubing ensure a proper distance of the outer cover or cladding from the inner pipe and connects both to one another.

The media flow through the inner pipe often causes vibrations of the inner pipe which generate noise. Such vibrations may also be caused by other reasons. To minimise the transfer of these vibrations and, thus, noise from the inner pipe to the outer cover or cladding, the spacers are designed to have some elasticity to function as a vibration (noise) damper. However, spacers known from prior art do only provide a certain damping effect, so that still an interest for increased noise damping remains. Further, they are not easy to install and suffer from sometimes insufficient mechanical resistance.

Hence, the problem to be solved by the present invention is to improve the absorption of vibrations by the spacers to further reduce the transfer of vibrations and, thus, noise from the inner pipe to the outer cover or cladding, whereby the spacer is fast and easy to install and provides a high mechanical resistance.

To solve this problem the tubing of the present invention, in a first aspect as claimed in claim 1, is characterized in that the spacer comprises: a first pedestal directly or indirectly attached to the inner pipe and a second pedestal directly or indirectly attached to the outer cover or cladding, an absorber means having a first absorber section and a second absorber section, the first absorber section being arranged on a side of the first pedestal facing the inner pipe and the second absorber section being arranged on a side of the second pedestal facing the outer cover or cladding, and a retainer retaining the absorber means. When the spacer is installed, the first pedestal is directly or indirectly attached to the inner pipe while the second pedestal is directly or indirectly attached to the outer cover or cladding.

Alternatively, in a second aspect as claimed in claim 3, the absorber means may have a first absorber section or a second absorber section, the first absorber section being arranged on side of the first pedestal facing the inner pipe or the second absorber section being arranged on a side of the second pedestal facing the outer cover or cladding, and an intermediate section arranged between the first and second pedestals.

In other words, in accordance with claim 1 and 3, the absorber means comprises at least two absorber section, the first and second absorber section or the first and intermediate absorber section or the intermediate and second absorber section.

Tests of the applicant have shown that the tubing and spacer of the present invention provide for an excellent damping of vibrations and, thus, an excellent reduction of noise compared to the prior art. It has anti-vibration properties enabling the reduction of low-frequency vibration transmission from the interior (inner pipe) towards the exterior, thereby achieving excellent noise reduction values. In particular combined with mineral wool the spacer provides an integral solution that enables high levels of noise reduction to be achieved. The mechanical resistance of the absorber means allows to achieve high attenuation levels from low to high load values.

To improve load bearing properties, the absorber means may further comprise an additional absorber section. In the embodiment of claim 1 the third absorber section may be an intermediate absorber section arranged between the first and second pedestal. The spacer is, thus, not only able to carry tensile force but also compressive force. In the alternative embodiment of claim 3 the additional absorber section may be the first or second absorber section. This improves the damping properties of the absorber means.

The absorber means may be formed with the intermediate, first and second absorber sections as a single piece or the intermediate, first and second absorber section being separated (separate parts). Both variants provide for a simple design of the spacer.

To reduce the number of different parts and to make the design even more simple, the first and second absorber sections may be identically shaped but arranged mirror-inverted. The optional intermediate absorber section may also be of the same shape as the first and second absorber sections.

The retainer may comprise a bolt protruding the first and second and, if present, the intermediate absorber sections, and first disc at first end of the bolt and a second disc (26) at a second end of the bolt (27) distal form the first end retaining the absorber means. This also contributes to a simple design. The retainer may apply a compression onto the absorber means. Such precompression may adjust the frequency where the spacer is most efficient. Alternatively or additionally this frequency can be adjusted by the material properties of the absorber means, i.e. the absorber sections. The absorber sections may have identical or different material properties.

The first and second pedestals may be C- or U- or Ω-shaped with the first or second absorber section being arranged in the space formed by the respective first or second pedestal, in particular wherein the pedestals are identically shaped but arranged mirror-inverted. In other words, the spacer receives a double C- or U- or Omega profile which adapts to all types of supports and renders it irrelevant in which orientation the spacer is installed. This enables easy and quick installation.

The circumferentially arranged second pedestals of the same cross-sectional plane of the tubing may be attached to a ring member carrying the outer cover or cladding. This allows for a smooth/tubular cover or cladding around the insulation layer while without the ring some risk exists that a "multi-edge" cover or cladding is formed with the spacers arranged in the edges of the cover or cladding. Additionally or alternatively the circumferentially arranged first pedestals of the same cross-sectional plane of the tubing are attached to a ring member surrounding the inner pipe.

The invention will now be described in more detail with reference to the accompanying drawings. In the drawing depicts:
- Fig. 1: the tubing of the present in a partial cross section with a spacer of the present invention installed therein;
- Fig. 2: the spacer shown in Fig. 1 in a longitudinal section along the plane II-II in Fig. 1; and
- Fig. 3: a diagram showing the insertion loss in dB over the frequency for an example of the spacer of the present invention.

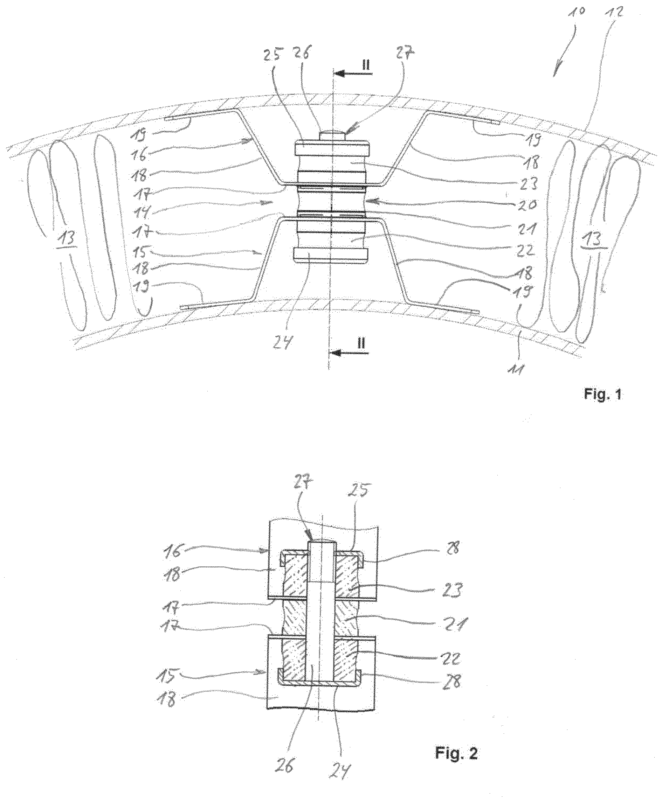

Fig. 1 depicts a partial cross section of the tubing 10 of the present invention. The tubing 10 comprises an inner pipe 11 through which a hot or cold media (a liquid or gas) flows. The tubing 10 further comprises an outer cover or cladding 12 which in the present embodiment is formed from galvanized. Yet, the cover or cladding 12 may be formed from any other material providing for sufficient corrosion resistance and enabling a sufficient protection of the tubing against weathering and/or mechanical damage. An insulation layer 13 is arranged in a tubular space between the inner pipe 11 and the cover or cladding 12. The cover or cladding 12 may also be a multi-layer cover or cladding for example comprising an inner barrier (e.g. a vapour barrier) and an outer protective cover. In one embodiment the tubing 10 comprises an inner steel pipe 11, an insulation layer 13 from mineral wool, e.g. "TECH Wire Mat MT 5.1" of the applicant in a thickness of 100 mm, and an outer cover or cladding 12 with an outer 1 mm galvanised steel sheet layer and an inner viscoelastic acoustic membrane to further decouple the outer cover or cladding 12 from the abutting mineral wool insulation.

To maintain a proper distance and, thus, tubular space between the inner pipe 11 and the outer cover or cladding 12, spacers 14 are arranged at distances in a circumferential as well as in a longitudinal direction of the tubing 10. The spacers 14 connect the inner pipe 11 and the outer cover or cladding 12. While the outer cover or cladding 12 may be supported in any suitable manner, the pipe may be supported by the spacers 14 within the outer cover or cladding 12. At least in the circumferential direction the spacers 14 should be equally spaced. The number of spacers 14 in a circumferential direction and over the length of the tubing 10 depends on the diameters of the inner pipe 11 and the cover or cladding 12 and the load to be supported.

The spacer 14 comprises two pedestals 15 and 16, the first (inner) pedestal 15 attached to the inner pipe 11 and the second (outer) pedestal 16 attached to the cover or cladding 12. The pedestals 15, 16 may be directly attached to the inner pipe 11 or outer cover or cladding, respectively, or indirectly in any suitable manner known in the art. For example L-shaped supports may be welded to the inner pipe 11 on which the first pedestal 15 is attached or the first pedestals 15 may be attached to a (first) ring mounted onto the inner pipe 11. The second pedestals 16 may be attached to a (second) ring that carries the outer cover or cladding 12.

Both pedestals 15, 16 have a traverse 17, two legs 18, one protruding at each side from the traverse 17, and two feet 19, one foot protruding from each leg 18 at an end distal from the traverse 17. Traverse 17 and legs 18 form a C- or U-shape which together with the foot 19 forms an (top) hat rail, e.g. an Ω-shape, for each pedestal 15, 16.

The pedestal 15, 16 are directly or indirectly attached to the inner pipe 11 or the cover or cladding 12, respectively with the foot 19, so that the pedestals protrude into the inner space between the inner pipe 11 and the cover or cladding 12 with the traverses 17 facing one another at some distance.

The spacer 14 further comprises an absorber means 20 having, in the present embodiment, three absorber sections, 21, 22, 23. An intermediate absorber section 21 is arranged between the two pedestals 15, 16, i.e. between their traverses 17. A first absorber section 22 is arranged on a side of the first pedestal 15 facing away from the intermediate absorber section 21 or, in other words facing the inner pipe 1. The second absorber section 23 is arranged on a side of the second pedestal 16 facing away from the intermediate absorber section 21 or, in other words, facing the outer cover or cladding 12. The first and second absorber sections 22, 23 are, thus, arranged between the respective legs 18 of the pedestals 15, 16, i.e. in the hollow space formed by traverse 17 and legs 18.

An end face of the first and second absorber section 22, 23, respectively, abuts the respective traverse 17. The other end face of the first absorber section 22 abuts a first disc 24 while the other end face of the second absorber section 23 abuts a second disc 25. The added height of the first and second absorber sections 22, 23 plus the respective discs 24, 25 is such that it is less then the height of the legs 18 in a radial direction of the tubing 11 so that the discs 24, 25 do not abut the inner pipe 11 or cover or cladding 12, respectively.

A bolt 26 protrudes through the absorber means 20, i.e. through all three absorber sections 21, 22, 23. Together with the two discs 24, 25 the bolt 25 forms a retainer 27 to retain the absorber means 20. While the first disc 24 for example may serve as a bolt head, the second disc 25 may serve as a nut allowing to preload the absorber means 20 with a compressive load. However, any other suitable means known in the art are possible to attach the discs 24, 25 to the bolt 26. The length of the retainer 27 is less than the added height of the legs 18 of first and second pedestal 15, 16 and the intermediate absorber section 21, so that the retainer 27 does not abut the inner pipe 11 or cover or cladding 12, respectively.

As can be appreciated from Fig. 2, discs 24, 25 are cuplike configured with a collar 28 facing towards the respective first or second absorber section 22, 23 and the traverses 17. The collar 28 covers a part of the height of the respective first or second absorber section 22, 23.

The absorber means 20 may be formed as a single piece with grooves formed between adjacent absorber sections 21, 22, 23. Yet, as shown in the embodiment of Fig. 1 and 2, the absorber sections 21, 22, 23 may also be separate parts. In such case the absorber sections 21, 22, 23 may still have identical material properties, e.g. be made of identical materials. Otherwise it might be beneficial if they have different material properties. For example, the intermediate absorber section 21 may be made of a first material while the first and second absorber sections 22, 23 may be made of a second material.

In any event the absorber means 20, i.e. the absorber sections 21, 22, 23 are made of a visco-elastic material. As a specific embodiment the applicant has tested the absorber means 20 known as Viscoren^{®} of Tecnoelastica S L, Calle del Camino Viejo de Getafe 59, 28946, Fuenlabrada, Madrid, Spain, having a Shore hardness (A) (ISO 7619-1.11) of 13±5, a density of 0.89 gr/cm³ (ISO 2781:88), a temperature range between - 10°C and 100°C.., and a lengthening of a break of 910 % (ASTM D412). It provides for excellent weather resistance, resistance to UV radiation and ozone and is 100 % recyclable.

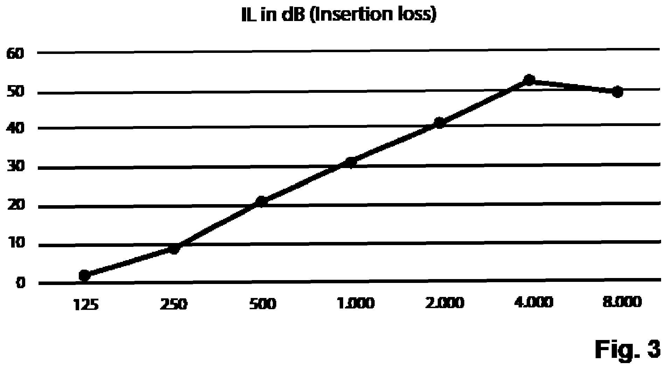

The embodiment as described in paragraph [0019] with the absorber elements as specified in paragraph [0029] and depicted in Fig. 1 has been measured to determine the insertion loss according to ISO 15665. The results are illustrated in Fig. 3. The tubing as described complies with classes C1, C2 and C3 in accordance with ISO 15665.

### List of reference numerals:

- 10: Tubing
- 11: Inner pipe
- 12: Cover or cladding
- 13: Insulation layer
- 14: Spacer
- 15: Pedestal
- 16: Pedestal
- 17: Traverse
- 18: Leg
- 19: Feet
- 20: Absorber means
- 21: Absorber section
- 22: Absorber section
- 23: Absorber section
- 24: Disc
- 25: Disc
- 26: Bolt
- 27: Retainer

## Claims

1. A double-walled insulated tubing (10) comprising:
an inner pipe (11),
an outer cover or cladding (12),
an insulation layer (13) arranged between the inner pipe (11) and the outer cover or cladding (12), and
a spacer (14) connecting the inner pipe (11) and the outer cover or cladding (12),
**characterized in that** the spacer comprises:
a first pedestal (15) directly or indirectly attached to the inner pipe (11) and a second pedestal (16) directly or indirectly attached to the outer cover or cladding (12),
an absorber means (20) having a first absorber section (22) and a second absorber section (23), the first absorber section (22) being arranged between on side of the first pedestal (15) facing the inner pipe (11) and the second absorber section (23) being arranged on a side of the second pedestal (16) facing the outer cover or
cladding (12), and
a retainer (27) retaining the absorber means (20).

2. The tubing (10) of claim 1, **characterized in that** an intermediate absorber section (21) is arranged between the first and second pedestals (15, 16).

3. A double-walled insulated tubing (10) comprising:
an inner pipe (11),
an outer cover or cladding (12),
an insulation layer (13) arranged between the inner pipe (11) and the outer cover or cladding (12), and
a spacer (14) connecting the inner pipe (11) and the outer cover or cladding (12),
**characterized in that** the spacer comprises:
a first pedestal (15) directly or indirectly attached to the inner pipe (11) and a second pedestal (16) directly or indirectly attached to the outer cover or cladding (12),
an absorber means (20) having a first absorber section (22) or a second absorber section (23), the first absorber section (22) being arranged on side of the first pedestal (15) facing the inner pipe (11) or the second absorber section (23) being arranged on a side of the second pedestal (16) facing the outer cover or cladding (12), and an intermediate section (21) arranged between the first and second pedestals (15, 16), and
a retainer (27) retaining the absorber means (20).

4. The tubing (10) of claim 3, **characterized in that** the absorber means (20) comprises the first and second absorber sections (22, 23).

5. The tubing (10) of any one of claim 2 to 4, **characterized in that** the absorber means (20) is a single piece or the absorber sections (21, 22, 23) being separated.

6. The tubing (10) of any one of claims 1 to 5, **characterized in that** the first and second absorber sections (22, 23) are identically shaped, but arranged mirror-inverted.

7. The tubing (10) of any one of claims 1 to 6, **characterized in that** the retainer (27) comprises a bolt (26), a first disc (24) at first end of the bolt (26) and a second disc (25) at a second end of the bolt (27), the retainer (27) retaining the absorber means (20), the bolt (26) protruding the absorber sections (21, 22, 23) present in the absorber means (20).

8. The tubing (10) of any one of claims 1 to 7, **characterized in that** the retainer (27) applies a pre-compression to the absorber means (20).

9. The tubing (10) of any one of claims 1 to 8, **characterized in that** the first and second pedestals (15, 16) are C- or U- or Ω-shaped with the first or second absorber section (22, 23) being arranged in the space formed by the respective first or second pedestal (15, 16), in particular wherein the pedestals (15, 16) are identically shaped but arranged mirror-inverted.

10. The tubing (10) of any one of claims 1 to 9, **characterized in that** the circumferentially arranged second pedestals (16) of the same cross-sectional plane of the tubing (10) are attached to a ring member carrying the outer cover or cladding (12).

11. The tubing (10) of any one of claims 1 to 10, **characterized in that** the circumferentially arranged first pedestals (15) of the same cross-sectional plane of the tubing (10) are attached to a ring member surrounding the inner pipe (11).

12. A spacer (14) for a tubing (10) of any one of claims 1or 2, **characterized by** a first pedestal (15) and a second pedestal (16),
an absorber means (10) having a first absorber section (22) and a second absorber section (23),the first absorber section (22) being arranged between on side of the first pedestal (15) facing the inner pipe (11) and the second absorber section (23) being arranged on a side of the second pedestal (16) facing the outer cover or cladding (12), and
a retainer (27) retaining the absorber means (20).

13. A spacer (14) for a tubing (10 of any one of clams 3 or 4, charactirzed by
a first pedestal (15) and a second pedestal (16),
an absorber means (20) having a first absorber section (22) or a second absorber section (23),the first absorber section (22) being arranged between on side of the first pedestal (15) facing the inner pipe (11) or the second absorber section (23) being arranged on a side of the second pedestal (16) facing the outer cover or cladding (12), and an intermediate section (21) arranged between the first and second pedestals (15, 16), and
a retainer (27) retaining the absorber means (20).

14. The spacer (14) of claim 12 or 13 further being configured as defined in any one of claims 5 to 11.
